# EUROPEAN PATENT SPECIFICATION

(11) **EP 3 118 283 B1**
(45) Date of publication and mention of the grant of the patent: **26.04.2023**
(21) Application number: 15761078.3
(22) Date of filing: 11.03.2015
(51) Int. Cl.: C10L 5/00, C10L 5/04, C10L 5/36, C10L 5/42

(54) **PULVERIZED COAL FOR PIG-IRON MAKING COMPRISING COW MANURE, AND PIG-IRON PRODUCTION METHOD USING SAME**
KOHLENSTAUB ZUR ROHEISENHERSTELLUNG MIT KUHGÜLLE UND VERFAHREN ZUR HERSTELLUNG VON ROHEISEN DAMIT
CHARBON PULVÉRISÉ CONTENANT DU FUMIER DE VACHE ENTRANT DANS LA FABRICATION DE LA FONTE BRUTE, ET PROCÉDÉ DE FABRICATION DE FONTE BRUTE L'UTILISANT

(30) Priority: 11.03.2014 KR 20140028554
(43) Date of publication of application: 18.01.2017
(73) Proprietor: Hyundai Steel Company, Incheon 401-712 (KR)
(72) Inventor: KIM, Byong Chul, Dangjin-si Chungcheongnam-do 343-812 (KR); LEE, Hong Seug, Dangjin-si Chungcheongnam-do 343-060 (KR); CHOI, Won Seok, Dangjin-si Chungcheongnam-do 343-010 (KR)
(74) Representative: Viering, Jentschura & Partner mbB Patent- und Rechtsanwälte
(86) International application number: PCT/KR2015/002377
(87) International publication number: WO 2015/137737

(56) References cited:
- DE-C1- 4 123 368
- JP-A- 2010 037 420
- KR-A- 20120 069 765
- KR-A- 20120 069 766
- KR-A- 20130 134 275
- US-A- 48 439
- US-A- 712 635
- US-A- 881 192
- JOHN G MATHIESON ET AL: "Potential for the use of biomass in the iron and steel industry", CHEMECA 2011: ENGINEERING A BETTER WORLD: SYDNEY HILTON HOTEL, NSW, AUSTRALIA, 18-21 SEPTEMBER 2011, 1 January 2011 (2011-01-01), pages 1065-1076, XP055402453, Barton, A.C.T ISBN: 978-0-85825-967-6

## Description

### [Technical Field]

The present invention relates to pulverized coal for iron making, which comprises cow manure, and a method for producing pig iron using the same, and more particularly to pulverized coal for iron making comprising cow manure which can improve combustibility and increase the efficiency and stability of a blast furnace operation, and to a method for producing pig iron using the same.

### [Background Art]

Iron making is a process that produces pig iron by smelting iron ore. In this process, iron ore, coke and limestone are charged into a blast furnace, and then hot air with a temperature of 1100 to 1300°C is blown into the furnace to burn the coke and smelt and reduce the iron ore to thereby melt iron contained in the iron ore. The iron produced by this process is known as pig iron.

Coke is obtained by introducing coal into a furnace and burning the coal at a high temperature of about 1,000 to 1,300°C, and serves not only as a heat source to melt iron ore (that is a compound of iron and oxygen) in a blast furnace, but also as a reducing agent to separate iron from iron ore.

In recent blast furnace operations for iron making, owing to the development of technology, a significant reduction in the production cost has become possible by injecting pulverized coal into the furnace bottom through the tuyere level in an operation in which expensive coke is used. Coke serves to ensure gas permeability by supporting a reducing agent, a heat source and a charged material in a blast furnace. On the other hand, pulverized coal consisting of very fine particles which are injected through the tuyere level functions as a reducing agent and a heat source by inducing combustion at an early stage within milliseconds.

The background art of the present invention is disclosed in Korean Patent No. 10-1198619 (November 11, 2011; entitled "Coal Briquette Comprising Coal and Pulverized Coal and Production Method Thereof"). Furthermore, DE 41 23 368 C discloses solid fuel granulates comprising dry matter from manure, coal dust and quicklime. The fuel granulates are produced by mixing liquid manure ("Gülle") in its original state, coal dust, preferably lignite dust, and quicklime in a granulator, followed by air drying to a predetermined moisture content.

### [Disclosure]

### [Technical Problem]

Embodiments of the present invention provide pulverized coal for iron making, which comprises cow manure.

Embodiments of the present invention also provide a method for producing pig iron using pulverized coal for iron making, which comprises cow manure.

Other objects and advantages of the present invention will become more fully apparent from the following detailed description, the appended claims and the accompanying drawings.

### [Technical Solution]

In accordance with one aspect of the present invention, there is provided pulverized coal for iron making, which comprises, based on 100 parts by weight of coal powder, 76 parts by weight or less of dried and crushed cow manure having a size of 50 mm or less and a water content of 20% or less.

In accordance with another aspect of the present invention, a method for producing pig iron, comprising the steps of: (1) drying cow manure; (2) crushing the dried cow manure in a pulverizer; (3) mixing the cow manure with coal powder to prepare pulverized coal; and (4) injecting the pulverized coal into a blast furnace.

### [Advantageous Effects]

According to embodiments of the present invention, pulverized coal may comprise cow manure to reduce the amount of coal contained in the pulverized coal, thereby reducing greenhouse gas emissions and blast furnace operation costs.

In addition, the combustibility of existing pulverized coal may be greatly improved, making an efficient blast furnace operation possible. Particularly, combustion of pulverized coke can be promoted to prevent the gas permeability and liquid permeability of the blast furnace from being further reduced by accumulation of the coke powder, thereby making a stable blast furnace operation possible.

When cow manure that is agricultural livestock waste is used according to embodiments of the present invention, the agricultural livestock waste can be recycled as resources so that advantages in environmental terms can be obtained. In addition, reducing gas can be easily produced, making it possible to reduce iron ore at high speed.

### [Description of Drawings]

FIG. 1 shows the results of comparing the combustibility of pulverized coal comprising cow manure according to an embodiment of the present invention as a function of the ratio of replacement with cow manure.
FIG. 2 compares the combustibility of each kind of pulverized coal comprising cow manure coal according to an embodiment of the present invention.
FIG. 3 compares the calorific value of pulverized coal comprising cow manure according to an embodiment of the present invention as a function of the rate of replacement with cow manure.
FIG. 4 shows the change in Bosh gas volume as a function of the rate of replacement with cow manure for pulverized coal comprising cow manure according to an embodiment of the present invention.
FIG. 5 shows the change in slag volume as a function of the rate of replacement with cow manure for pulverized coal comprising cow manure according to an embodiment of the present invention.
FIG. 6 shows the injectability index of cow manure according to an embodiment of the present invention.
FIG. 7A shows the particle shape of conventional pulverized coal, and FIG. 7B shows the particle shape of cow manure according to an embodiment of the present invention.
FIG. 8 shows a method of producing pig iron using pulverized coal for iron making comprising cow manure according to another embodiment of the present invention

### [Mode for Invention]

The present invention can be variously modified and can have various forms, and specific embodiments are shown in the drawings and described in detail in the specification. However, this is not intended to limit the present invention to specific embodiments, and it should be understood that the present invention includes all modifications, equivalents or replacements that fall within in the spirit and technical scope of the present invention. In the following description, the detailed description of related known technology will be omitted when it may obscure the subject matter of the present invention.

The terms "first", "second", etc., may be used to describe various components, but the components are not limited by the terms. The terms are used only for the purpose of distinguishing a component from other components.

Terms used in the specification are used only to describe a specific embodiment and are not intended to limit the scope of the present invention. Singular expressions include plural expressions unless specified otherwise in the context thereof. In the specification, the terms "comprise", "have", etc., are intended to denote the existence of mentioned characteristics, numbers, steps, operations, components, parts, or combinations thereof, but do not exclude the probability of existence or addition of one or more other characteristics, numbers, steps, operations, components, parts, or combinations thereof.

Hereinafter, pulverized coal for iron making comprising cow manure according to the present invention, and a method for producing pig iron using the same, will be described with reference to the accompanying drawings. In the following description made with reference to the accompanying drawings, like components will be denoted by like reference numerals, and the overlapping description of the components will be omitted.

In accordance with one aspect of the present invention, there is provided pulverized coal for iron making, which comprises, based on 100 parts by weight of coal powder, 76 parts by weight or less of dried and crushed cow manure having a size of 50 mm or less and a water content of 20% or less.

Cow manure that is used as a replacement for coal in the present invention generally contains a large amount of volatile matter, and thus has a characteristic in that the fixed carbon content thereof is significantly lower than that of coal. Particularly, the calorific value of cow manure is about 50% of existing coal. However, it was shown that the volatile matter of cow manure is thermally decomposed at an earlier stage and contains a higher concentration of oxygen, compared to carbon, and thus can be used as an additive capable of promoting the combustion of existing carbon (see Table 1 below). Furthermore, as shown in Table 2 below, cow manure has advantages in that it is generated in significantly large amounts and is steadily supplied, and thus it can be used continuously in a blast furnace.

In addition, existing cow manure has been mostly used as compost and the like, but the amount of cow manure generated is significantly larger than the amount of cow manure used, and thus livestock raisers have experienced difficulty in disposal of cow manure. Accordingly, the present invention can considerably contribute not only to solving environmental problems, but also to reducing production costs, because cow manure which has been disposed of as livestock waste is applied to a blast furnace operation.

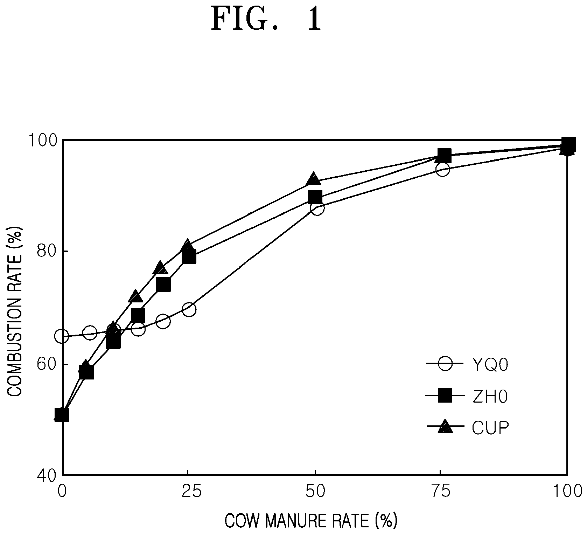

When cow manure is used in pulverized coal according to the present invention, it can significantly improve the combustibility of the pulverized coal. FIG. 1 compares the combustibility of pulverized coals as a function of the rate of replacement with cow manure. When pulverized coals were burned while they were gradually replaced with cow manure, it could be seen that the combustion rate thereof was increased up to 98.4% (see FIG. 1). Particularly, the present invention has a very excellent effect of improving the combustibility of low-quality pulverized coal. Low-quality pulverized coal forms a large amount of unburned char due to its low combustion efficiency, and is accumulated in a blast furnace in all directions so that it will block the pores of coke to thereby reduce the gas permeability and liquid permeability of the blast furnace. In addition, the degradation of coke at the tuyere level is considerable. Unburned char generally has a reaction interfacial area significantly larger than that of pulverized coke so that it will be burned faster than the pulverized coke. Thus, the unburned char inhibits the combustion of the pulverized coke, and further reduces the gas permeability of the blast furnace due to accumulation of the coke powder. Therefore, according to the present invention, the combustion efficiency of low-quality pulverized coal can be improved, and thus problems associated with the use of low-quality pulverized coal can be solved and a stable blast furnace operation can be induced.

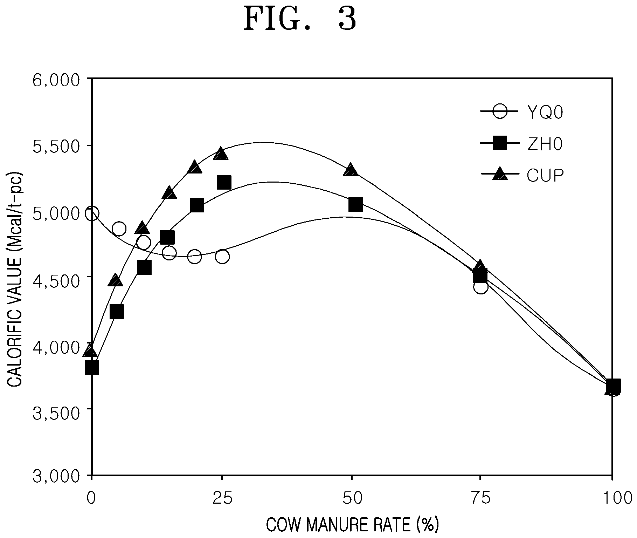

In addition, when cow manure is used according to the present invention, it can improve the calorific value of pulverized coal. Although the combustibility of pulverized coal is also associated with the accumulation of the pulverized coal powder in a blast furnace, the combustion efficiency of the pulverized coal has a significant effect on the initial calorific value of the pulverized coal. Thus, in order to more closely examine the effect of such cow manure on the improvement in combustibility and the change in initial calorific value by cow manure, the change in calorific value of each kind of pulverized coal as a function of the rate of replacement with cow manure was examined, and the results of the examination are shown in FIG. 3. As a result, it was shown that in the case of pulverized coal comprising cow manure, the initial calorific value thereof was steadily increased due to its greatly improved combustibility as the rate of replacement with cow manure increased up to about 30%.

Meanwhile, it is important that the pulverized coal comprises cow manure so that the Bosh gas volume (BGV) of a blast furnace in an iron making process will be lower than a critical limit. Thus, in the present invention, the pulverized coal preferably comprises, based on 100 parts by weight of coal powder, 76 parts by weight or less of cow manure.

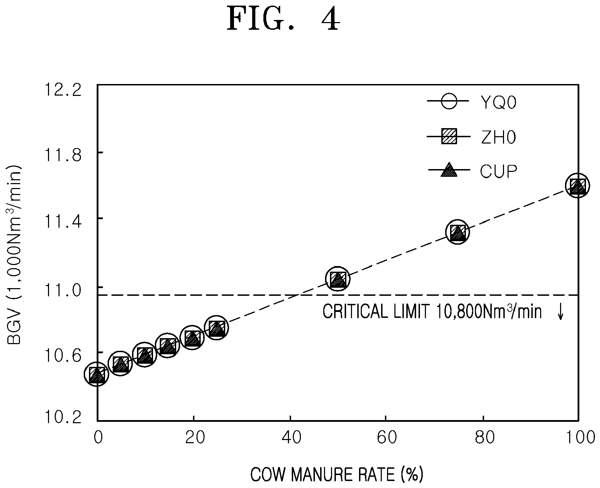

If a portion of pulverized coal is replaced with cow manure, the highly volatile components of the cow manure can increase the Bosh gas volume (BGV), and thus increase the pressure of the blast furnace. If the pressure of the blast furnace increases, it will be difficult to ensure good gas permeability, and it can be impossible to perform a stable blast furnace operation. For this reason, for a stable blast furnace operation, the pulverized coal preferably comprises, based on 100 parts by weight of coal powder, 76 parts by weight or less of cow manure (see FIG. 4). If cow manure is contained in an amount of more than 76 parts by weight based on 100 parts by weight of coal powder, it will be difficult to maintain the Bosh gas volume lower than a critical limit of, for example, about 10,800 Nm³/min. The term "parts by weight of cow manure" is expressed in terms of the rate of the replacement cow manure relative to coal powder as shown in FIG. 4 or the like. Namely, the rate of the replacement cow manure relative to coal powder is 43% or less (see FIG. 4).

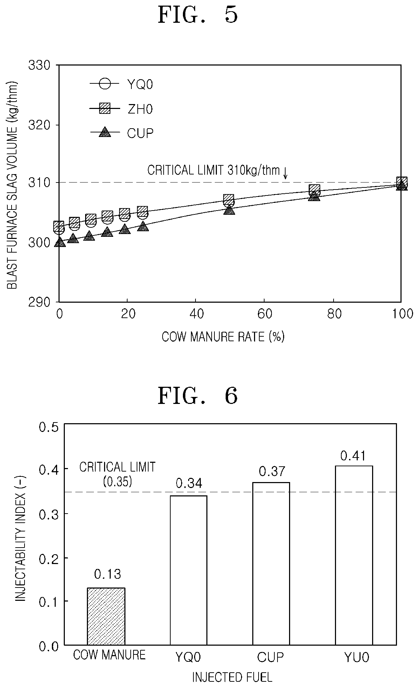

In addition, cow manure has a high ash content, but it was shown that, when a portion of pulverized coal was replaced with cow manure, the replacement cow manure had no great effect on the blast furnace slag volume (see FIG. 5).

In the present invention, the crushed cow manure preferably has a particle size of 50 mm or less, but is not limited thereto. If the particle size of the crushed cow manure is more than 50 mm, a large amount of energy will be required to dry the cow manure, and it will be difficult to mix the cow manure uniformly with coal powder.

The pulverized coal comprising cow manure according to the present invention may further comprise, in addition to coal powder and cow manure, various components that are added to conventional pulverized coal. A person skilled in the technical field to which the present invention pertains may suitably add additional components depending on blast furnace operation conditions without difficulty.

In accordance with another aspect of the present invention, a method for producing pig iron, comprising the steps of: (1) drying cow manure; (2) crushing the dried cow manure in a pulverizer; (3) mixing the cow manure with coal powder to prepare pulverized coal; and (4) injecting the pulverized coal into a blast furnace.

According to a specific aspect of the present invention, drying of cow manure in step (1) may be performed by primarily drying the cow manure to a water content of 65% or less in a yard under conditions in which no fermentation occurs, and secondarily drying the cow manure, crushed by the pulverizer in step (2), to a water content of 20% or less in a dryer. If the cow manure is naturally dried in the yard and then further dried in the dryer as described above, the drying cost can be reduced. Namely, the yard in which the cow manure is dried may be a roofed accommodation capable of preventing penetration of water upon raining, and the yard can save the cost caused by a relatively expensive dryer. In addition, if the cow manure is primarily dried, and then is crushed in the pulverizer, and then introduced into the dryer, the drying efficiency can further be improved.

According to another specific aspect of the present invention, the cow manure is passed through a particle size separator before introduction into the pulverizer of step (2) so that cow manure having a particle size of 50 mm or less will be transferred directly to the dryer, and the cow manure is crushed in the pulverizer in step (2) so as to have a particle size of 50 mm or less. If the cow manure is passed through the particle size separator before introduction into the pulverizer as described above so that a cow manure portion having a particle size of 50 mm or less will be transferred directly to the dryer, the crushing efficiency can be improved.

According to still another specific aspect of the present invention, the dryer can be heated using either waste heat from an iron making process including an existing blast furnace or byproduct gas such as blast furnace gas, coke gas or electric furnace gas. Thus, according to the present invention, cow manure can be dried using either waste heat generated in an iron making process or byproduct gas, and thus the amount of coal used can be reduced while additional costs can be minimized.

Hereinafter, specific embodiments of the present invention will be described in detail with reference to the accompanying drawings.

### Comparison of Major Characteristics of Cow Manure and Pulverized Coal for Blast Furnace

In the present invention, various replacement fuels were selected in order to improve the combustibility of pulverized coal, and the major characteristics thereof were compared with those of conventional pulverized coal as shown in Table 1 below.

Biomass considered as a replacement for coal generally contains a large amount of volatile matter, and thus has a characteristic in that the fixed carbon content thereof is significantly lower than that of coal. Particularly, the calorific value of biomass is about 50% of existing coal. However, the volatile matter of biomass is thermally decomposed at an earlier stage and contains a larger amount of oxygen, compared to carbon, and it is considered that the volatile matter can be used as an additive capable of promoting the combustion of existing coal. Table 1 below shows the characteristics of major biomass and pulverized coal for a blast furnace.

**Table 1**

| | | Proximate analysis (ad, % ) | | | | Ultimate analysis (daf, %) | | | | | Calorific value (kcal/kg) |
|---|---|---|---|---|---|---|---|---|---|---|---|
| | | IM | Ash | VM | FC | C | H | N | S | O | |
| Biomass | Cow manure | 2.60 | 20.30 | 66.19 | 10.91 | 54.07 | 7.86 | 1.86 | 0.22 | 35.99 | 3742 |
| | Chaff | 4.65 | 10.70 | 73.6 | 11.05 | 52.72 | 7.48 | 0.29 | 0.12 | 39.39 | 4093 |
| | Rice straw | 4.65 | 12.40 | 70.7 | 12.25 | 50.23 | 5.72 | 0.16 | 0.13 | 43.76 | 3711 |
| | PKS | 2.45 | 1.70 | 79.35 | 16.50 | 55.98 | 6.23 | 0.13 | 0.41 | 37.25 | 4947 |
| Coal | YQ0 | 1.02 | 9.97 | 10.08 | 78.93 | 93.44 | 4.01 | 1.26 | 0.47 | 14.03 | 7665 |
| | ZH0 | 0.97 | 10.45 | 9.36 | 79.21 | 92.16 | 3.81 | 1.52 | 0.46 | 16.04 | 7583 |
| | CUP | 1.01 | 9.30 | 18.78 | 70.91 | 91.11 | 4.68 | 1.8 | 0.45 | 8.51 | 7701 |

| | | | | | | | | | | | |
|---|---|---|---|---|---|---|---|---|---|---|---|
| * ad: air-dried bases; daf: dry ash free basis; IM: inherent moisture; VM: volatile matter; FC: fixed carbon; C: carbon; H: hydrogen; S: sulfur; O: oxygen; PKS: palm kernel shell; YQ0: Yanquan; ZH0: Zhaozhuang; CUP: Curragh PCI. | | | | | | | | | | | |

Meanwhile, coal manure is used as a replacement for coal. As shown in Table 2 below, cow manure has advantages in that it is generated in significantly large amounts and is steadily supplied, and thus it can be used continuously in a blast furnace. The amount of cow manure generated in Korea is estimated to be 23,291,745 tons per year. Cow manure has a water content of about 85%, and thus the amount of cow manure remaining after complete drying is estimated to be 3,493,780 tons per year. Table 2 below shows the amount of cow manure generated in Korea.

**Table 2**

| Korean native cattle | | Milking cows | | Generation per day (t/d) | | Wet total (t/d) | Dry total (t/d) |
|---|---|---|---|---|---|---|---|
| Number of cattle | Number of stalls | Number of cows | Number of stalls | Korean native cattle | Milking cows | | |
| 3,058,601 | 146,930 | 420,113 | 6,00777 | 44,656 | 19,157 | 23,291,745 | 3,493,780 |

| | | | | | | | |
|---|---|---|---|---|---|---|---|
| * Daily cow manure generation per cow (wet basis): 14.6 kg for Korean native cattle and 45.6 kg for milking cow. | | | | | | | |

In addition, existing cow manure has been mostly used as compost and the like, but the amount of cow manure generated is significantly larger than the amount of cow manure used, and thus livestock raisers have experienced difficulty in disposal of cow manure. Accordingly, the present invention can considerably contribute not only to solving environmental problems, but also to reducing production costs, because cow manure which has been disposed of as livestock waste is applied to a blast furnace operation.

### Change in Combustibility of Pulverized Coal as a Function of Rate of Replacement with Cow Manure

FIG. 1 compares the combustibility of pulverized coals as a function of the rate of replacement with cow manure. As shown therein, when pulverized coals were used alone, YQO showed a combustion rate of 65.1%, ZHO showed a combustion rate of 50.3%, and CUP showed a combustion rate of 51.3%. Thus, YQO showed relatively good combustibility, but ZHO and CUP showed considerably low combustion properties. However, when the pulverized coals were burned while they were gradually replaced with cow manure, it could be seen that the combustion rate was increased up to 98.4% (see FIG. 1).

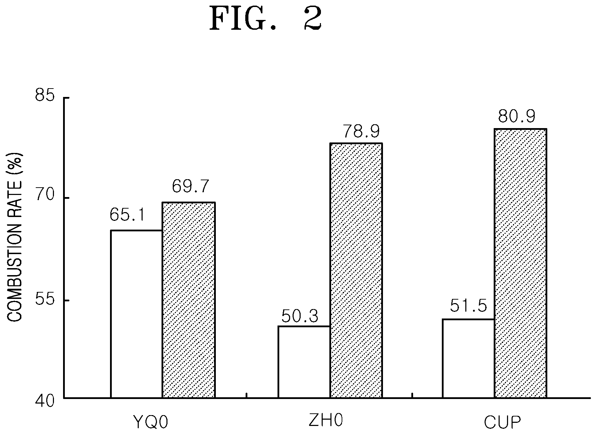

In order to more closely examine the effect of replacement with cow manure for each kind of pulverized coal, the combustion rate at a cow manure rate of 25% at which the combustibility was linearly increased was compared, and the results of the comparison are shown in FIG. 2. As a result, it could be seen that the combustion rate was increased to 69.7% for YQ0, 78.9% for ZH0, and 80.9% for CUP. However, as shown in FIG. 2, when the pulverized coals were replaced with cow manure, the effect of improving the combustibility was observed, but the effect was different between the kinds of pulverized coal. Namely, in the case of ZHO and CUP which showed poor combustibility before addition of cow manure, the effect of significantly improving the combustibility could be observed.

### Change in Calorific Value of Pulverized Coal as a Function of Rate of Replacement with Cow Manure

Although the combustibility of pulverized coal is also associated with the accumulation of the pulverized coal powder in a blast furnace, the combustion efficiency of the pulverized coal has a significant effect on the initial calorific value of the pulverized coal. For example, when combustion rate of pulverized coal YQO having a calorific value of 7,665 Kcal/kg is 65.1%, the initial calorific value of the pulverized coal is only 4,990 Kcal/kg, which is disadvantageous for a highly efficient operation. Thus, in order to closely examine the effect of such cow manure on the improvement in combustibility and the change in initial calorific value by cow manure, the change in caloric value of each kind of pulverized coal as a function of the rate of cow manure was examined, and the results of the examination are shown in FIG. 3.

It was shown that, when ZHO and CUP, which showed low combustibility before addition of cow manure, were placed with cow manure, the initial calorific value thereof was steadily increased due to their greatly improved combustibility as the rate of replacement with cow manure increased up to 30%. Meanwhile, it was shown that in the case of YQ0, the initial calorific value thereof steadily decreased until the rate of replacement with cow manure reached 25%, even though the combustibility of cow manure was improved. This is believed to be because the initial calorific value of YQO was better than that of other two kinds of pulverized coal and was influenced by the low calorific value (3,742Kcal/kg) of the cow manure added.

### Change in Bosh Gas Volume as a Function of Rate of Replacement with Cow Manure

If a portion of pulverized coal is replaced with cow manure, the highly volatile components of the cow manure can increase the Bosh gas volume (BGV), and thus increase the pressure of the blast furnace. If the pressure of the blast furnace increases, it will be difficult to ensure good gas permeability, and it can be impossible to perform a stable blast furnace operation.

The change in BGV as a function of the rate of replacement with cow manure for each kind of pulverized coal was examined in a blast furnace having an internal volume of 5,250 m² under the following operating conditions: air flow rate: 7,000N m³/min; moisture amount: 25 g/Nm³; oxygen load: 32,100N m³/min; and pulverized coal rate (PCR): 165 kg/thm. The results of the examination are shown in FIG. 4. When the pulverized coals were used alone, YQ0, ZHO and CUP showed BGVs of 10,473 Nm³/min, 10,482 Nm³/min and 10,475 Nm³/min, respectively, which are lower than a critical limit of 10,800 Nm³/min. However, it can be seen that the BGV steadily increased with an increase in the cow manure rate and was 11,600 Nm³/min at a cow manure rate of 100%, indicating that the BGV increased linearly with an increase in the cow manure rate (see FIG. 4). However, because the critical limit can be more strictly changed, the cow manure rate is preferably set at 43% or less for a stable blast furnace operation.

### Change in Slag Volume as a Function of Rate of Replacement with Cow Manure

Cow manure has a high ash content. For this reason, if a portion of pulverized coal is replaced with cow manure, the blast furnace slag volume can increase. If the slag volume increases, problems, including poor molten iron and an increase in the reducing agent cost, can arise. Thus, it is needed to examine a suitable critical limit required for a smooth blast furnace operation.

The change in the blast furnace slag volume as a function of the rate of replacement with cow manure for each kind of pulverized coal was examined in a blast furnace having an internal volume of 5,250 m² under the following operating conditions: air flow rate: 7,000N m³/min; moisture amount: 25 g/Nm³; oxygen load: 32,100 N m³/min; and pulverized coal rate (PCR): 165 kg/thm. The results of the examination are shown in FIG. 5. When cow manure was not added, YQ0, ZHO and CUP showed slag volumes of 302 kg/thm, 303 kg/thm and 300 kg/thm, respectively, and even when the cow manure ratio was 100%, the pulverized coals showed a slag volume of 310 kg/thm, indicating that cow manure has no significant effect on the slag volume (see FIG. 5). However, because the critical limit can be more strictly changed, the cow manure rate may preferably be set at 43% or less for a stable blast furnace operation.

### Comparison of Injectability Indices of Cow Manure and Conventional Pulverized Coal

Injectability is an index that indicates whether pulverized coal after crushing can be easily injected into a blast furnace when the pulverized coal is transferred to the blast furnace through a plurality of pipes. The injectability can be influenced by factors, including the frictional force between the pulverized coal and the inner wall of the pipes, resistance, etc. As shown in FIG. 6, the injectability index of cow manure is as low as about 1/3 of that of pulverized coal such as YQ0, CUP or YB0, indicating that cow manure has a relatively good transfer property. Meanwhile, the indicated control limit (0.35) for the injectability index can be changed depending on operating conditions in the future.

### Comparison of Particle Shape after Combustion of Conventional Pulverized Coal and Cow Manure

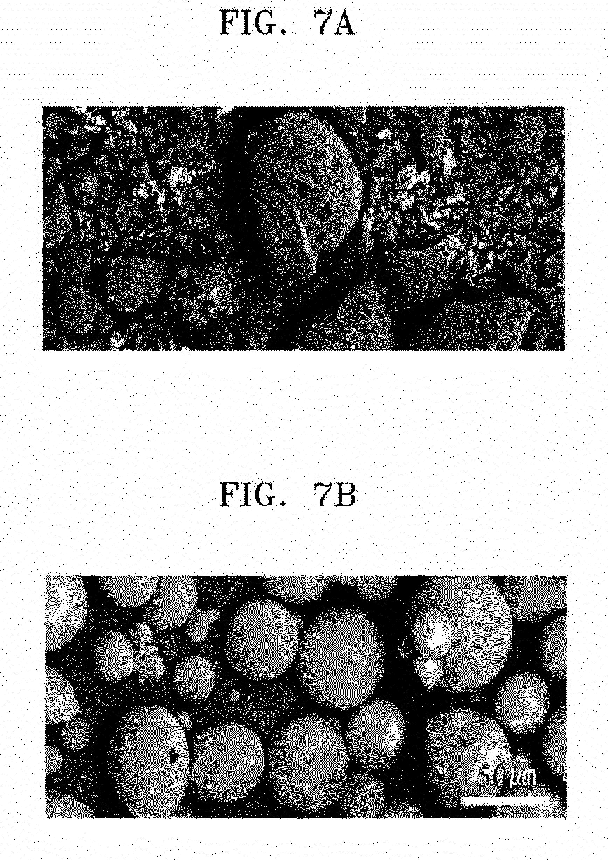

FIG. 7A shows the particle shape after combustion of conventional coal YQ0, and FIG. 7b shows the particle shape after combustion of cow manure according to an embodiment of the present invention. As shown in FIG. 1, the YQO coal has a combustion rate higher than those of other conventional pulverized coals, but shows an irregular particle shape.

In comparison with this, cow manure has a relatively spherical particle shape compared to YQ0, and this spherical shape suggests that cow manure has a completely combustion property.

### Method for Producing Pig Iron Using Pulverized Coal for Iron Making Comprising Cow Manure according to Embodiment of the Present Invention

This embodiment illustrates a method in which cow manure is applied by simultaneous injection to a pulverized coal injection process that uses conventional coal. This embodiment has an advantage in that cow manure can be easily applied while minimizing the addition of facilities to a pig-iron production process in which conventional pulverized coal is injected.

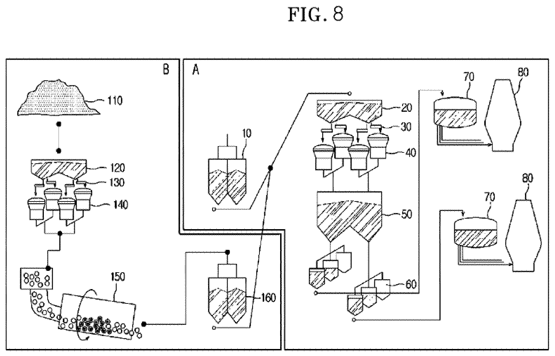

Hereinafter, a method for producing pig iron using pulverized coal for iron making comprising cow manure according to an embodiment of the present invention will be described with reference to FIG. 8.

Referring to A of FIG. 8, in a pulverized coal injection process that uses conventional coal alone, two or three kinds of raw material coals are primarily stored in a coal storage silo 10, and the coals are discharged from the bottom of the silo in predetermined amounts according to a desired blend ratio and introduced into a mixed-coal storage hopper 20 and also passed through a particle size separator 40 to remove impurities or the like. Then, the coal is pulverized in a pulverizer 40 so that 70% or more of the coal powder has a particle size of 75 µm or less, and the pulverized coal is secondarily stored in a storage bin 50. Then, the pulverized coal is passed through a conveyor hopper 60 together with N₂ under a pressure of 18 bar and stored in a pulverized coal injection hopper 70. Finally, the pulverized coal is injected into a blast furnace 80 through the tuyere level under an air pressure of 10 bar or more.

Referring to B of FIG. 8, in order to use cow manure having a high water content in pulverized coal, cow manure 110 is first naturally dried to a water content of at least 85% in a yard. Herein, the yard in which the cow manure is dried may be a roofed accommodation capable of preventing penetration of water upon raining.

Next, the naturally dried cow manure 110 is stored in a cow manure storage hopper 120, and then crushed in a pulverizer 140 so as to have a particle size of 50 mm. Herein, a particle size separator 130 may be disposed below the cow manure storage hopper 120 so that cow manure having a particle size of 50 mm or less can be transferred directly to a dryer 150 without passage through the pulverizer 140, thereby increasing the crushing efficiency of the pulverizer 140.

Next, the cow manure is dried in a dryer 150 at a temperature of at least 100°C. For drying, a indirect heating method employing either waste heat from an existing blast furnace or other iron making process or a byproduct gas such as blast furnace gas, coke gas or electric furnace gas is used. However, if collected cow manure has a water content of about 20%, the above-described process may be omitted, and the cow manure may be subjected directly to an existing process that uses coal.

The cow manure stored as described above is primarily stored in a cow manure storage silo 160, and it is discharged through the bottom of the silo in a predetermined amount according to a desired blending ratio and introduced into the mixed coal storage hopper 20.

According to some other embodiments, the cow manure 110 may be naturally dried to a water content of 20% or less. The cow manure 110 naturally dried to a water content of 20% or less may be stored in the cow manure storage hopper 120, and then crushed in the pulverizer 140 so as to have a particle size of 50 mm or less. The cow manure 110 crushed to a particle size of 50 mm or less may be stored in the cow manure storage silo 160. In addition, through the particle size separator 130 disposed below the cow manure storage hopper 120, cow manure determined to have a particle size of 50 mm or less may be transferred to the cow manure storage silo 160 without passage through the pulverizer 140.

Next, the cow manure 110 is subjected to the above-described pulverized coal injection process and injected into the blast furnace 80 through the tuyere level from the pulverized coal injection hopper 70, thereby producing pig iron.

As described above, according to embodiments of the present invention, pulverized coal may comprise cow manure to reduce the amount of coal contained in the pulverized coal, thereby reducing greenhouse gas emissions and blast furnace operation costs.

In addition, the combustibility of existing pulverized coal may be greatly improved, making an efficient blast furnace operation possible. Particularly, combustion of pulverized coke can be promoted to prevent the gas permeability and liquid permeability of the blast furnace from being further reduced by accumulation of the coke powder, thereby making a stable blast furnace operation possible.

When cow manure that is agricultural livestock waste is used according to embodiments of the present invention, the agricultural livestock waste can be recycled as resources so that advantages in environmental terms can be obtained. In addition, reducing gas can be easily produced, making it possible to reduce iron ore at high speed.

Although the present invention has been described with respect to the embodiments, any person skilled in the technical field will appreciate that the present invention can be variously modified without departing from the scope of the present invention as disclosed in the accompanying claims.

## Claims

1. Pulverized coal for iron making, which comprises, based on 100 parts by weight of coal powder, 76 parts by weight or less of dried and crushed cow manure having a water content of 20% or less.

2. The pulverized coal of claim 1, wherein the crushed cow manure has a particle size of 50 mm or less.

3. A method for producing pig iron, comprising the steps of:
(1) drying cow manure;
(2) crushing the dried cow manure in a pulverizer;
(3) mixing the cow manure with coal powder to prepare pulverized coal; and
(4) injecting the pulverized coal into a blast furnace.

4. The method of claim 3, wherein the pulverized coal comprises, based on 100 parts by weight of the coal powder, 76 parts by weight or less of dried and crushed cow manure having a water content of 20% or less.

5. The method of claim 3, wherein the cow manure is dried to a water content of 20% or less.

6. The method of claim 5, wherein the cow manure is passed through a particle size separator before introduction into the pulverizer of step (2) so that cow manure having a particle size of 50 mm or less will be transferred directly to a dryer, and the cow manure is crushed in the pulverizer of step (2) so as to have a particle size of 50 mm or less.

## Patentansprüche

1. Pulverisierte Kohle zum Eisenerzeugen, welche, basierend auf 100 Gewichtsteilen Kohlepulver, 76 Gewichtsteile oder weniger von getrockneter und zerkleinerter Rindergülle aufweist, welche einen Wassergehalt von 20 % oder weniger hat.

2. Pulverisierte Kohle nach Anspruch 1, wobei die zerkleinerte Rindergülle eine Partikelgröße von 50 mm oder weniger aufweist.

3. Verfahren zum Herstellen von Roheisen, welches aufweist die Schritte:
(1) Trocknen von Rindergülle,
(2) Zerkleinern der getrockneten Rindergülle in einem Pulverisierer,
(3) Mischen der Rindergülle mit Kohlepulver, um pulverisierte Kohle darzustellen, und
(4) Injizieren der pulverisierten Kohle in einen Hochofen hinein.

4. Verfahren nach Anspruch 3, wobei die pulverisierte Kohle, basierend auf 100 Gewichtsteilen des Kohlepulvers, 76 Gewichtsteile oder weniger von getrockneter und zerkleinerter Rindergülle aufweist, welche einen Wassergehalt von 20 % oder weniger hat.

5. Verfahren nach Anspruch 3, wobei die Rindergülle auf einen Wassergehalt von 20 % oder weniger getrocknet wird.

6. Verfahren nach Anspruch 5, wobei die Rindergülle vor Einleitung in den Pulverisierer von Schritt (2) durch einen Partikelgrößenseparator geleitet wird, sodass Rindergülle, welche eine Partikelgröße von 50 mm oder weniger hat, direkt zu einem Trockner transferiert wird, und die Rindergülle im Pulverisierer von Schritt (2) zerkleinert wird, um eine Partikelgröße von 50 mm oder weniger zu haben.

## Revendications

1. Charbon pulvérisé pour la fabrication de fer, qui comprend, sur la base de 100 parties en poids de poudre de charbon, 76 parties en poids ou moins de fumier de vache séché et concassé ayant une teneur en eau de 20 % ou moins.

2. Charbon pulvérisé selon la revendication 1, dans lequel le fumier de vache concassé présente une taille de particule de 50 mm ou moins.

3. Procédé de production de fonte brute, comprenant les étapes consistant à :
(1) sécher du fumier de vache ;
(2) concasser le fumier de vache séché dans un pulvérisateur ;
(3) mélanger le fumier de vache avec de la poudre de charbon pour préparer du charbon pulvérisé ; et
(4) injecter le charbon pulvérisé dans un haut fourneau.

4. Procédé selon la revendication 3, dans lequel le charbon pulvérisé comprend, sur la base de 100 parties en poids de la poudre de charbon, 76 parties en poids ou moins de fumier de vache séché et concassé présentant une teneur en eau de 20 % ou moins.

5. Procédé selon la revendication 3, dans lequel le fumier de vache est séché jusqu'à une teneur en eau de 20 % ou moins.

6. Procédé selon la revendication 5, dans lequel le fumier de vache est amené à passer à travers un séparateur de tailles de particule avant une introduction dans le pulvérisateur de l'étape (2) de sorte que le fumier de vache présentant une taille de particule de 50 mm ou moins soit transféré directement à un dispositif de séchage, et le fumier de vache est concassé dans le pulvérisateur de l'étape (2) de façon à présenter une taille de particule de 50 mm ou moins.
